# EUROPÄISCHE PATENTANMELDUNG

(11) **EP 2 693 171 A1**
(43) Veröffentlichungstag der Anmeldung: **05.02.2014**
(21) Anmeldenummer: 13177393.9
(22) Anmeldetag: 22.07.2013
(51) Int. Cl.: G01F 1/66

(54) **Ultraschalldurchflussmesser mit einer Umlenkspiegelvorrichtung**

(30) Priorität: 03.08.2012 DE 202012007472 U
(71) Anmelder: Körner, Hans-Holger, 23758 Oldenburg/Holstein (DE)
(72) Erfinder: Körner, Hans-Holger, 23758 Oldenburg/Holstein (DE)
(74) Vertreter: Glawe, Delfs, Moll

(57) **Zusammenfassung**

Die Erfindung betrifft eine Umlenkspiegelvorrichtung (20) für einen Ultraschalldurchflussmesser sowie einen Ultraschalldurchflussmesser mit einer erfindungsgemäßen Umlenkspiegelvorrichtung (20).

Die erfindungsgemäße Umlenkspiegelvorrichtung (20) für einen Ultraschalldurchflussmesser (10) umfasst einen Umlenkspiegel (21) mit wenigstens zwei abstehenden Beinen (22), wobei der Umlenkspiegel (21) und die Beine (22) einstückig gefertigt sind, und eine rohrförmige Spiegelhalterung (23) aus Kunststoff, in welcher der Umlenkspiegel (21) ohne jegliches Spiel so fixiert ist, dass der Umlenkspiegel (21) von einer Fluidströmung durch den rohrförmigen Querschnitt der Spiegelhalterung (23) umströmt wird. Die Spiegelhalterung (23) kann dabei im Spritzgussverfahren so hergestellt sein, dass die freien Enden der Beine (22) des Umlenkspiegels (21) bei der Herstellung der Spiegelhalterung (23) vom Kunststoff umspritzt werden. Alternativ kann der Umlenkspiegel (21) mit einem oder mehr Beinen (22) in eine oder mehr Taschen (26) in der Spiegelhalterung (23) eingeführt sein und ein oder mehrere weitere Beine (22) in eine oder mehrere weitere Taschen (27) mit einem aushärtenden Material, vorzugsweise einer Zwei-Komponenten-Masse (28), eingegossen sein.

Der erfindungsgemäße Ultraschalldurchflussmesser (10) umfasst ein Messrohr (12) mit einer rohrförmigen Messstrecke, wenigstens einen Ultraschallwandler (11) und wenigstens eine erfindungsgemäße Umlenkspiegelvorrichtung (20), wobei die Umlenkspiegelvorrichtung (20) koaxial mit dem Messrohr (12) so angeordnet ist, dass von einem Ultraschallwandler (11) stammende Ultraschallwellen von der Umlenkspiegelvorrichtung (12) in die Messstrecke umgelenkt werden.

## Beschreibung

Die Erfindung betrifft eine Umlenkspiegelvorrichtung für einen Ultraschalldurchflussmesser sowie einen Ultraschalldurchflussmesser mit einer erfindungsgemäßen Umlenkspiegelvorrichtung.

Die Ausbreitungsgeschwindigkeit von bestimmten Wellen, insbesondere Schallwellen, in einem fluiden Medium ist abhängig von dessen relativer Geschwindigkeit. Dieses Phänomen nutzt man zur Durchflussmessung bei Ultraschalldurchflussmessern. Bei entsprechenden Durchflussmessern werden die Laufzeiten von Ultraschallwellen entlang einer von einem fluiden Medium durchströmten Messstrecke ermittelt. Aus den gewonnenen Ergebnissen kann dann die Durchflussgeschwindigkeit und damit die Durchflussmenge des Fluids berechnet werden.

Durchflussmengenmesseinrichtungen für fluide Medien, die Ultraschallwellen zur Durchflussmessung verwenden, sind aus dem Stand der Technik, beispielsweise der deutschen Patentschrift DE 103 27 076 B3, bekannt. Das Gerät enthält eine von dem Fluid durchströmte Messstrecke, an deren gegenüberliegenden Enden Umlenkspiegel vorgesehen sind. Über die Umlenkspiegel werden Schallwellen eines Ultraschallwandlers in die Messstrecke umgelenkt. Durch Laufzeitmessung einzelner Schallimpulse kann die Geschwindigkeit des Fluids in der Messstrecke ermittelt und daraus die Durchflussmenge errechnet werden. Die Umlenkspiegel werden durch Reflektoreinsätze gehalten.

Die Durchflussmengenmesseinrichtungen aus dem Stand der Technik sind größtenteils aus Metall gefertigt, da Metall ausreichend fest ist und gleichzeitig die Laufzeitmessung der Ultraschallwellen nur wenig beeinträchtigt. Entsprechende Durchflussmengenmesseinrichtungen aus Metall sind jedoch kostenintensiv. Die zunehmende Verwendung, auch in der Wohnungswirtschaft, verlangt aber kostengünstige Herstellungsverfahren.

Darüber hinaus hat sich gezeigt, dass bei den Durchflussmengenmesseinrichtungen aus dem Stand der Technik die Befestigung der Umlenkspiegel in der Regel unzureichend im Hinblick auf automatisierte Herstellungsverfahren mit Robotereinsatz ist. Auch können die Umlenkspiegel im Stand der Technik durch das sie umströmende Fluid in Schwingung versetzt werden, wodurch das Messergebnis verfälscht wird. Im Stand der Technik wird teilweise versucht, diesen Effekt durch aufwändige mehrteilige Spiegelhalterungen abzumildern. Diese Spiegelhalterungen sind jedoch kostenintensiv und/oder problematisch in der Montage.

Aufgabe der vorliegenden Erfindung ist es, eine Umlenkspiegelvorrichtung für Ultraschalldurchflussmesser sowie einen Ultraschalldurchflussmesser mit erfindungsgemäßer Umlenkspiegelvorrichtung zu schaffen, bei dem die Nachteile aus dem Stand der Technik nicht mehr oder nur noch in vermindertem Maße auftreten.

Gelöst wird diese Aufgabe durch eine Umlenkspiegelvorrichtung gemäß dem Hauptanspruch sowie einen Ultraschalldurchflussmesser gemäß dem nebengeordneten Anspruch. Vorteilhafte Weiterbildungen sind Gegenstand der abhängigen Ansprüche.

Demnach betrifft die Erfindung eine Umlenkspiegelvorrichtung für einen Ultraschalldurchflussmesser umfassend einen Umlenkspiegel mit wenigstens zwei abstehenden Beinen, wobei der Umlenkspiegel und die Beine einstückig gefertigt sind, und eine rohrförmige Spiegelhalterung aus Kunststoff, in welcher der Umlenkspiegel ohne jegliche Spiel so fixiert ist, dass der Umlenkspiegel von einer Fluidströmung durch den rohrförmigen Querschnitt der Spiegelhalterung umströmt wird.

Daneben betrifft die Erfindung einen Ultraschalldurchflussmesser umfassend ein Messrohr mit einer rohrförmigen Messstrecke, wenigstens einen Ultraschallwandler und wenigstens eine erfindungsgemäße Umlenkspiegelvorrichtung, wobei die Umlenkspiegelvorrichtung koaxial mit dem Messrohr so angeordnet ist, dass von dem einen Ultraschallwandler stammende Ultraschallwellen von der Umlenkspiegelvorrichtung in die Messstrecke umgelenkt werden.

Indem der Umlenkspiegel wenigstens zwei abstehende Beine aufweist, mit denen er ohne Spiel in einer rohrförmigen Spiegelhalterung befestigt ist, ist die Position des Spiegels gegenüber der Spiegelhalterung eindeutig definiert. Dadurch kann eine Fixierung des Spiegels geschaffen werden, die hilft, die Toleranzkette durch Einsatz von weniger Bauteilen zu verbessern. Es ist besonders bevorzugt, wenn der Umlenkspiegel genau drei Beine aufweist, die weiter bevorzugt jeweils im Abstand von 120° in der Ebene der Spiegelfläche abstehen. Alternativ kann die Anzahl der Beine vorzugsweise auch mehr als drei betragen.

Da die abstehenden Beine einstückig mit dem Umlenkspiegel ausgeformt sind, wird die Gefahr von Messfehlern durch Positionsänderungen der Spiegel und damit Änderungen in der Länge der von den Schallwellen zurückzulegenden Strecke reduziert. Außerdem wird der Energieverbrauch durch die einstückige Ausgestaltung ohne eine zusätzliche Verbindungsstelle von zwei Bauteilen - beispielsweise zwischen einem Spiegelträger und einem Spiegel - reduziert. Entsprechende Verbindungsstellen weisen häufig, wenn auch ungewollt, ein gewisses Spiel auf, wodurch Schwingungen und Vibrationen bei Umströmung des Spiegels mit einem Fluid auftreten können und so das nutzbare Schallsignal vermindert wird.

Um eine Befestigung des Umlenkspiegels in der Spiegelhalterung ohne Spiel zu erreichen, kann vorgesehen sein, dass die Spiegelhalterung im Spritzgussverfahren hergestellt ist, wobei der Umlenkspiegel so in der Spritzgussform integriert ist, dass die freien Enden der Beine des Umlenkspiegels bei der Herstellung der Spiegelhalterung vom Kunststoff umspritzt werden. Ist der Umlenkspiegel aus ausreichend temperaturbeständigem Material, sind die beim Spritzgussverfahren auftretenden Werkzeug- bzw. Fülltemperaturen von beispielsweise 300 °C unproblematisch.

Alternativ kann vorgesehen sein, dass der Umlenkspiegel mit einem oder mehr Beinen in eine oder mehr Taschen der Spiegelhalterung eingeführt ist und ein oder mehrere weitere Beine in eine oder mehrere weitere Taschen mit einem aushärtendem Material eingegossen ist. Die erstgenannten Taschen sind dabei vorzugsweise so ausgeführt, dass die Beine praktisch formschlüssig in diese Taschen eintauchen. Die Tasche für das wenigstens eine weitere Bein ist demgegenüber vergrößert, so dass das oder die weiteren Beine in diese Taschen eingeschwenkt werden können. Dort wird das wenigstens eine weitere Bein mit dem aushärtenden Material, bei dem es sich vorzugsweise um eine 2-Komponenten-Masse handelt, fixiert.

Es kann auch vorgesehen sein, dass der Umlenkspiegel mit einem oder mehr Beinen in eine oder mehr Taschen der Spiegelhalterung eingeführt ist und ein oder mehrere weitere Beine in eine oder mehrere weitere Taschen mit wenigstens einem, entlang wenigstens einer Lineargleitführung bewegbaren Keil fixiert ist. Die erstgenannten Taschen sind dabei vorzugsweise so ausgeführt, dass die Beine praktisch formschlüssig in diese Taschen eintauchen. Die Tasche für das wenigstens eine weitere Bein ist demgegenüber vergrößert, so dass das oder die weiteren Beine in diese Taschen eingeschwenkt werden können. Das oder die weiteren Beine werden durch den oder die Keile fest eingeklemmt, so dass der Umlenkspiegel ohne Spiel in der Spiegelhalterung fixiert ist. Der Keil kann dabei bevorzugt aus Kunststoff oder einem Dichtungsmaterial (z.B. Ethylen-Propylen-Dien-Monomer, EPDM) sein. Die Lineargleitführung ist bevorzugt eine Schwalbenschwanzführung.

Es ist bevorzugt, wenn der Umlenkspiegel und die damit einstückig geformten Beine aus Keramik ist. Vorzugsweise handelt es sich bei dem Keramikmaterial um einen oxidkeramischen Werkstoff, besonders bevorzugt um einen Keramikwerkstoff auf Aluminiumoxid- (Al₂O₃), Berylliumoxid- (BeO)-oder Zirkondioxid- (ZrO₂)-Basis. Es sind aber auch Keramiken aus Titandioxid (TiO₂), Magnesiumoxid (MgO), Siliziumcarbid (SiC), Siliziumnitrit (SiN) oder Aluminiumtitanat (AlTi) denkbar. Der keramische Umlenkspiegel kann auch aus einer Kombination der vorgenannten Keramikwerkstoffe bestehen. So ist es beispielsweise vorteilhaft Zirkonoxid durch Magnesiumoxid oder Yttriumoxid (Y₂O₃) zu stabilisieren.

Alternativ ist es möglich, dass der Umlenkspiegel und die damit einstückig geformten Beine aus Metall, bspw. Edelstahl oder Messing, ist.

Es ist grundsätzlich bevorzugt, wenn sich das für den Umlenkspiegel verwendete Material - bspw. Keramik oder Metall - auch bei ca. 300°C temperaturbeständig ist. Das Material ist dann für das oben beschriebene Spritzgussverfahren geeignet.

Die erfindungemäße Umlenkspiegelvorrichtung kann vorzugsweise eine Aufnahme für einen Ultraschallwandler aufweisen, wobei diese senkrecht zum rohrförmigen Querschnitt der Spiegelhalterung angeordnet ist. Indem der Ultraschallwandler an der Spiegelhalterung befestigt werden kann, ist die Position vom Ultraschallwandler zum Umlenkspiegel eindeutig definiert, womit auch die Richtung der vom Umlenkspiegel umgelenkten Ultraschallwellen feststeht.

Es kann außerdem vorgesehen sein, dass die Umlenkspiegelvorrichtung ein Außengewinde zum Anschluss an eine Rohrleitung aufweist. In diesem Fall kann die Umlenkspiegelvorrichtung mit der rohrförmigen Spiegelhalterung auf einfache Weise einem Rohrabschnitt bilden und Ultraschallwellen in einen benachbarten Rohrabschnitt - beispielsweise ein Messrohr - umlenken.

Der Kunststoff der Spiegelhalterung kann vorzugsweise einen Glasfaseranteil aufweisen. Dadurch kann die Festigkeit der Spiegelhalterung, speziell im Bereich eines Anschlussgewindes, erhöht werden.

Der erfindungsgemäße Ultraschalldurchflussmesser umfasst ein Messrohr mit einer rohrförmigen Messstrecke, wenigstens einen Ultraschallwandler und wenigstens eine erfindungsgemäß Umlenkspiegelvorrichtung. Dabei ist die Umlenkspiegelvorrichtung so angeordnet, dass vom Ultraschallwandler stammende Ultraschallwellen von dem Umlenkspiegel in die rohrförmige Messstrecke umgelenkt werden, so dass sie sich entlang der Messstrecke ausbreiten. Am anderen Ende des Messrohrs kann eine zweite Umlenkspiegelvorrichtung vorgesehen sein, die aus der Messstrecke stammenden Ultraschallwellen auf einen zweiten Ultraschallwandler umlenkt, wo die Ultraschallwellen dann aufgenommen werden. Aus der Laufzeit der Ultraschallwellen vom ersten Ultraschallwandler zum zweiten Ultraschallwandler kann auf die Geschwindigkeit des durch das Messrohr strömenden Fluids geschlossen werden.

Das Messrohr und die Umlenkspiegelvorrichtung können miteinander stoffschlüssig verbunden sein. Dazu können Messrohr und Umlenkspiegelvorrichtung miteinander verklebt oder verschweißt werden. Zum Verschweißen kann insbesondere ein Ultraschallschweißverfahren angewendet werden.

Alternativ ist es möglich, das Messrohr und die Umlenkspiegelvorrichtung miteinander formschlüssig zu verbinden, bspw. durch einen umlaufenden Spannbund . Sowohl Messrohr als auch Umlenkspiegelvorrichtung können dazu umlaufende Vorsprünge aufweisen, die vom Spannbund umgriffen werden. Es kann auch eine Verdrehsicherung zwischen den einzelnen Bauteilen vorgesehen sein.

Um den Austritt von Fluid bei den erfindungsgemäßen Ultraschalldurchflussmessern zu verhindern, kann zwischen Messrohr und Umlenkspiegelvorrichtung eine Axialdichtung und/oder eine Radialdichtung vorgesehen sein.

Es ist bevorzugt, wenn das Messrohr aus einem unverstärkten Kunststoff ist. Dadurch können eventuelle Störsignale, die durch Reflektion von Ultraschallwellen auf der Innenseite des Messrohrs entstehen können, abgemildert werden.

Die Erfindung wird nun anhand von Ausführungsbeispielen unter Bezugnahme auf die beigefügten Zeichnungen beispielhaft beschrieben. Diese zeigen:
- Figur 1: eine schematische Teildarstellung eines erstes Ausführungsbeispiels eines erfindungsgemäßen Ultraschalldurchflussmessers mit einer erfindungsgemäßen Umlenkspiegelvorrichtung;
- Figur 2: eine Seitenansicht des Ultraschalldurchflussmessers aus Figur 1;
- Figur 3: eine schematische Teildarstellung eines zweiten Ausführungsbeispiels eines erfindungsgemäßen Ultraschalldurchflussmessers mit einer erfindungsgemäßen Umlenkspiegelvorrichtung; und
- Figur 4: eine schematische Teildarstellung eines dritten Ausführungsbeispiels eines erfindungsgemäßen Ultraschalldurchflussmessers mit einer erfindungsgemäßen Umlenkspiegelvorrichtung.

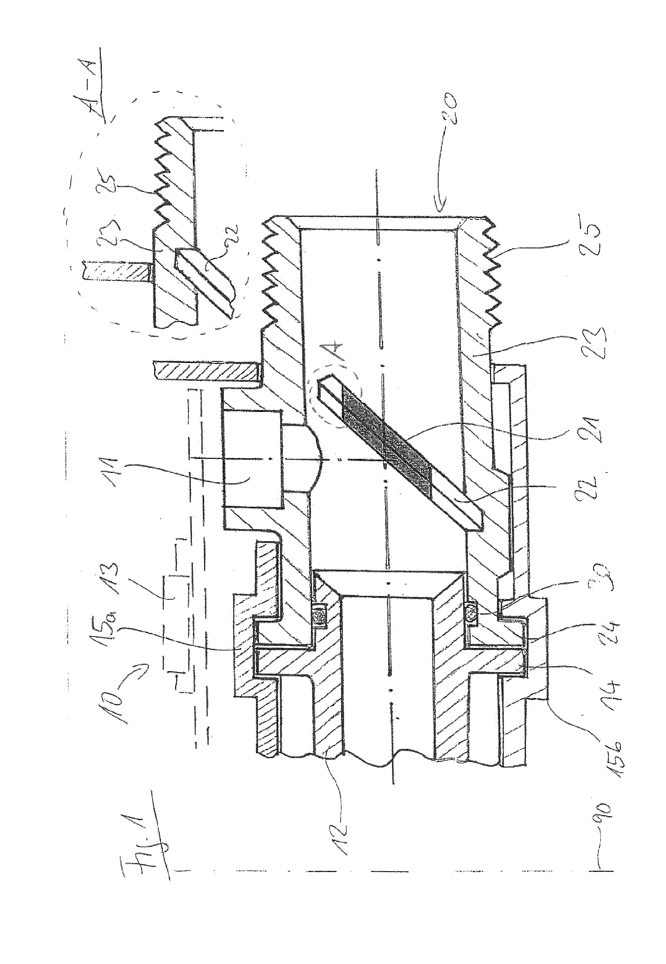

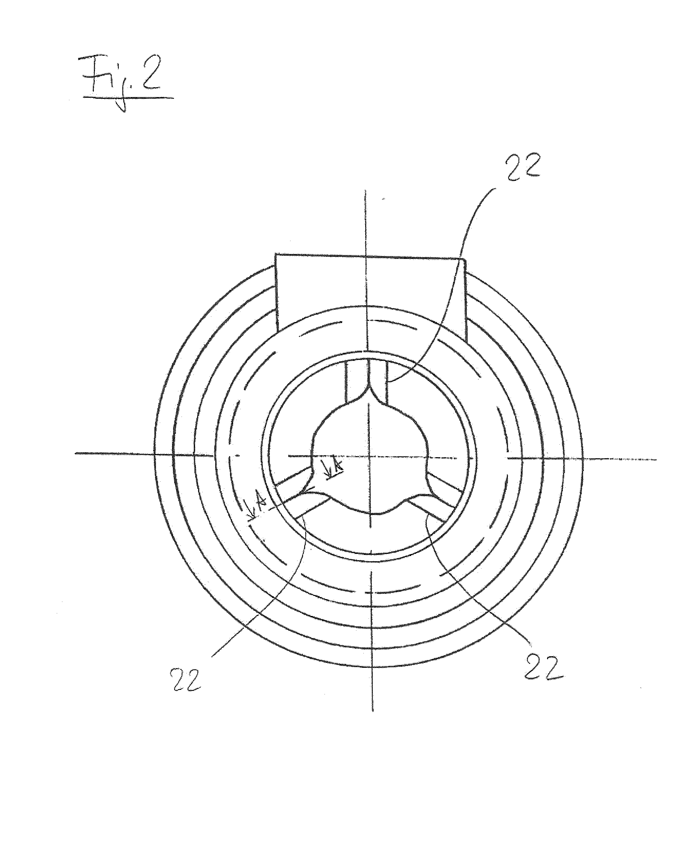

In Figur 1 ist ein schematischer Teilschnitt durch einen erfindungsgemäßen Ultraschalldurchflussmesser 10 mit erfindungsgemäßen Umlenkspiegelvorrichtungen 20 dargestellt. Dabei ist zur besseren Übersicht lediglich das eine Ende des Ultraschalldurchflussmessers 10 mit einer erfindungsgemäßen Umlenkspiegelvorrichtung 20 dargestellt. Der Ultraschalldurchflussmesser 10 ist jedoch im Wesentlichen spiegelsymmetrisch zur Achse 90. Insbesondere ist am anderen Ende das Ultraschalldurchflussmessers 10 spiegelsymmetrisch ebenfalls eine Umlenkspiegelvorrichtung 20 vorgesehen. Die seitliche Ansicht des Ultraschalldurchflussmessers 10 ist in Figur 2 dargestellt.

Der Ultraschalldurchflussmesser 10 umfasst neben den beiden Umlenkspiegelvorrichtungen 20 noch zwei Ultraschallwandler 11, die jeweils an den Umlenkspiegelvorrichtungen 20 befestigt sind, ein Messrohr 12 sowie eine Auswerteeinheit 13. Die von einem Ultraschallwandler 11 erzeugten Ultraschallwellen werden durch die eine Umlenkspiegelvorrichtung 20 so umgelenkt, dass sie durch das Messrohr 12 gelangen. Am anderen Ende des Messrohrs 12 werden die Ultraschallwellen mithilfe der anderen Umlenkspiegelvorrichtung 20 auf den anderen Ultraschallwandler 11 umgelenkt. Durch die Auswerteeinheit 13 kann die Laufzeit der Ultraschallwellen zwischen den beiden Ultraschallwandlern 11 gemessen werden. Befindet sich das im Ultraschalldurchflussmesser 10 befindliche Fluid in Bewegung durch das Messrohr 12, so kommt es zu Laufzeitveränderungen, die von der Auswerteeinheit 13 festgestellt und in eine Durchflussgeschwindigkeit sowie ggf. eine Durchflussmenge des Fluids durch den Ultraschalldurchflussmesser 10 umgerechnet werden können. Das Messrohr 12 ist dabei aus unverstärktem Kunststoff, um möglichst wenig Störsignale aufgrund von Reflektion zu verursachen.

Die Umlenkspiegelvorrichtung 20 umfasst einen Umlenkspiegel 21 mit drei von dem Umlenkspiegel 21 abstehenden Beinen 22. Die Beine 22 sind einstückig mit dem Umlenkspiegel 21 gebildet und im Abstand von jeweils 120° in der Ebene des Umlenkspiegels 21 angeordnet. Im dargestellten Ausführungsbeispiel sind der Umlenkspiegel 21 und die damit verbunden Beine 22 aus Keramik gefertigt. Es ist aber auch möglich, dass der Umlenkspiegel 21 und die Beine 22 aus Metall sind.

Des Weiteren umfasst die Umlenkspiegelvorrichtung 20 noch eine rohrförmige Spiegelhalterung 23 aus glasfaserverstärktem Kunststoff. Die rohrförmige Spiegelhalterung 23 ist im Spritzgussverfahren hergestellt, wobei der Umlenkspiegel 21 so in die Form der Spiegelhalterung 23 eingelegt worden ist, dass dessen Beine 22 von dem Kunststoff der Spiegelhalterung 23 umspritzt wurden. Dies gilt für alle drei Beine 22, wie beispielhaft in der Schnittdarstellung A-A gemäß der Schnittlinie aus Figur 2 dargestellt. Der Umlenkspiegel 21 ist dadurch ohne jegliche Spiel in der Spiegelhalterung 23 fixiert. Dabei ist der Umlenkspiegel 21 so ausgerichtet, dass Schallwellen von einem, in einer Ausnehmung der Spiegelhalterung 23 vorgesehenen Ultraschallwandler 11 in die Achse der rohrförmigen Spiegelhalterung 23 umgelenkt werden. Koaxial mit der Spiegelhalterung 23 ist das Messrohr 12 angeordnet, womit die Schallwellen also auch in das Messrohr 12 umgelenkt werden.

An dem jeweiligen Ende, an dem Umlenkspiegelvorrichtung 20 und Messrohr 12 zusammengefügt sind, weisen beide Komponenten jeweils einen umlaufenden Flansch 14, 24 auf. Die Flansche 14, 24 werden von einem zweiteiligen, umlaufenden Spannbund 15a, 15b aus verstärktem Kunststoff umgriffen, womit Umlenkspiegelvorrichtung 20 und Messrohr 12 lösbar miteinander verbunden sind. Der Spannbund 15a, 15b erstreckt sich über den Bereich der Verbindung zwischen Umlenkspiegelvorrichtung 20 und Messrohr 12 hinaus und bildet so das Gehäuse für den Ultraschalldurchflussmesser 10 und vermeidet durch eine geeignete z.B. profilierte Innenoberfläche parasitäre Störsignale, die die Messung beeinflussen können. Zwischen Umlenkspiegelvorrichtung 20 und dem Messrohr 12 ist außerdem eine Radialdichtung 30 vorgesehen.

Am anderen Ende der Spiegelhalterung 23 ist ein Außengewinde 22 vorgesehen, mit dem der Ultraschalldurchflussmesser 10 an eine Rohrleitung angeschlossen werden kann.

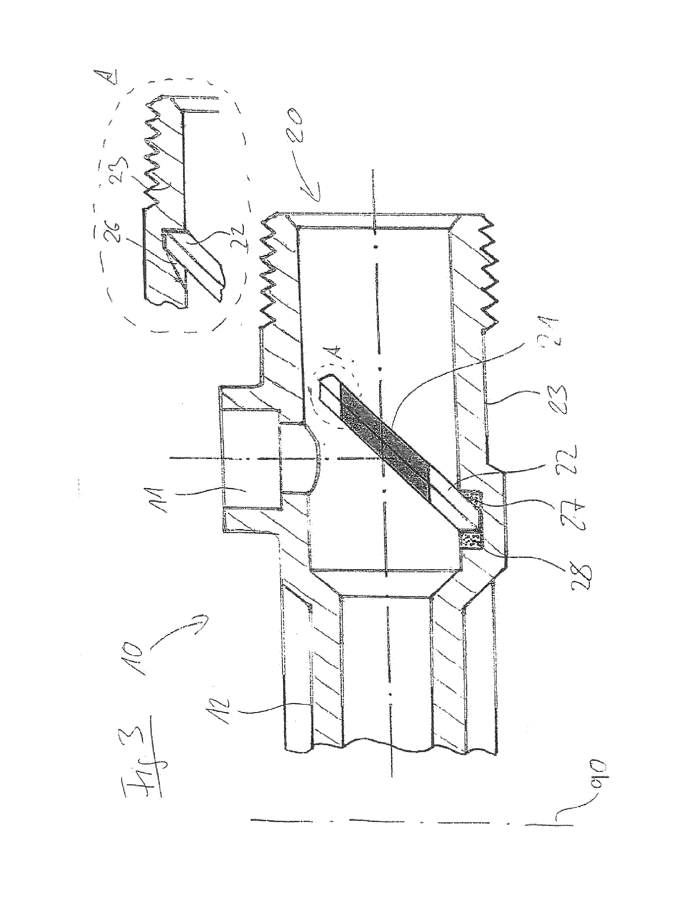

In Figur 3 ist ein zweites Ausführungsbeispiel eines erfindungsgemäßen Ultraschalldurchflussmessers 10 dargestellt, wobei auf die Darstellung einer Auswerteeinheit 13 (vergleiche Figur 1) verzichtet wurde. Der Ultraschalldurchflussmesser 10 ist ebenfalls spiegelsymmetrisch gegenüber einer Achse 90, weshalb aus Gründen der Übersichtlichkeit lediglich das eine Ende des Ultraschalldurchflussmessers 10 dargestellt ist. Desweiteren wird im Folgenden nur auf Besonderheiten des zweiten Ausführungsbeispiels im Vergleich zum ersten Ausführungsbeispiel aus Figuren 1 und 2 eingegangen. Im Übrigen wird auf die obigen Ausführungen verwiesen.

Beim zweiten Ausführungsbeispiel gemäß Figur 3 ist das Messrohr 12 einstückig mit der rohrförmigen Spiegelhalterung 23 der Umlenkspiegelvorrichtung 20 ausgebildet. Alternativ kann das Messrohr 12 auch mit der Umlenkspiegelvorrichtung verschweißt werden. Die rohrförmige Spiegelhalterung 23 weist zwei Taschen 26 auf, in die zwei der Beine 22 des Umlenkspiegels 21 praktisch formschlüssig eingeführt sind (vgl. Detail A). Das dritte Bein 22 des Umlenkspiegels 21 wurde anschließend in eine dritte Tasche 27 in der Spiegelhalterung 23 eingeschwenkt und dort mit einer ZweiKomponenten-Masse 28 eingegossen. Die stoffschlüssige Verbindung in der dritten Tasche 27 zusammen mit der praktisch formschlüssigen Verbindung in den Taschen 26 gewährleistet eine Fixierung des Umlenkspiegels 21 ohne jegliches Spiel in der Spiegelhalterung 23.

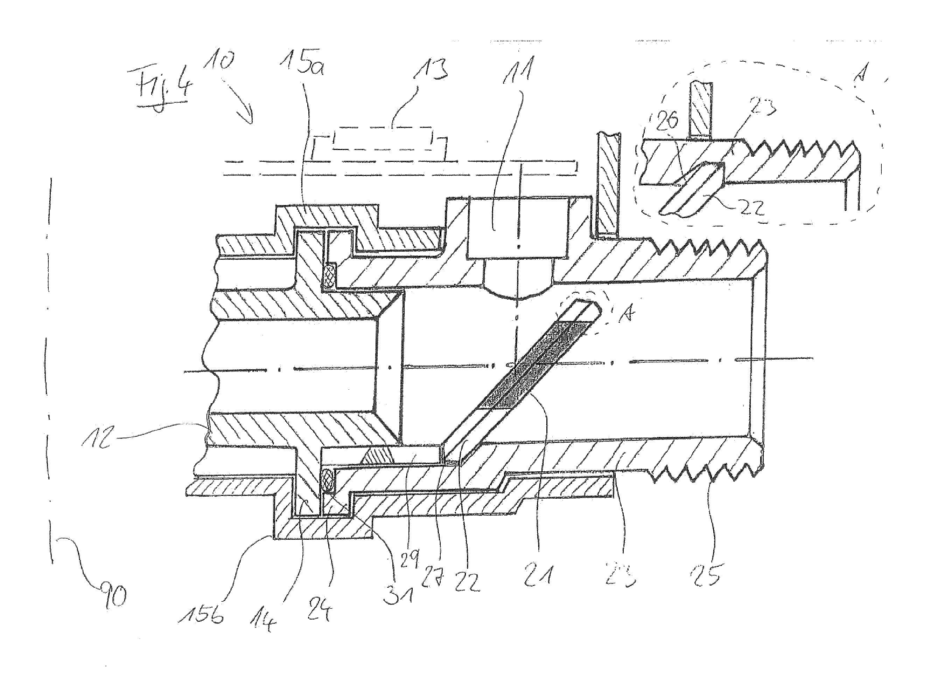

In Figur 4 ist ein drittes Ausführungsbeispiel eines erfindungsgemäßen Ultraschalldurchflussmessers 10 dargestellt. Im Folgenden wird lediglich auf die Unterschiede gegenüber der Ausführungsbeispiele aus den Figuren 1 bis 3 eingegangen. Im Übrigen wird auf die obigen Ausführungen verwiesen.

Zwei Beine 22 des Umlenkspiegels 21 sind in praktisch formschlüssigen Taschen 26 eingeführt, während das dritte Bein 22 anschließend in eine dritte Tasche 27 eingeschwenkt wurde. Die Befestigung des Umlenkspiegels 21 in der Spiegelhalterung 23 entspricht insoweit der des Ausführungsbeispiels aus Figur 3. In der dritten Tasche 27 wird das Bein 22 jedoch nicht eingegossen, sondern vielmehr durch einen Keil 29 aus Kunststoff oder EPDM eingeklemmt und somit fixiert. Der Keil 29 ist Teil einer schwalbenschwanzförmigen Lineargleitführung und kann mit dem Messrohr 12 oder der Dichtung 31 einstückig ausgebildet sein. Der Keil 29 wird durch den Flansch 14 des Messrohrs 12 so eingeklemmt, dass bei einer formschlüssigen Verbindung zwischen Messrohr 12 und Spiegelhalterung 23 (beispielsweise durch ein Spannrohr 15) die Beine 22 des Umlenkspiegels 21 so in die Taschen 26, 27 gedrückt werden, dass der Umlenkspiegel 21 in der Spiegelhalterung 23 ohne jegliches Spiel fixiert ist.

In dem Ausführungsbeispiel gemäß Figur 4 ist zwischen Messrohr 12 und Spiegelhalterung 23 eine Axialdichtung 31 vorgesehen.

## Patentansprüche

1. Umlenkspiegelvorrichtung (20) für einen Ultraschalldurchflussmesser (10) umfassend einen Umlenkspiegel (21) mit wenigstens zwei abstehenden Beinen (22), wobei der Umlenkspiegel (21) und die Beine (22) einstückig gefertigt sind, und eine rohrförmige Spiegelhalterung (23) aus Kunststoff, in welcher der Umlenkspiegel (21) ohne jegliches Spiel so fixiert ist, dass der Umlenkspiegel (21) von einer Fluidströmung durch den rohrförmigen Querschnitt der Spiegelhalterung (23) umströmt wird,
**dadurch gekennzeichnet, dass**
die Spiegelhalterung (23) im Spritzgussverfahren so hergestellt ist, dass die freien Enden der Beine (22) des Umlenkspiegels (21) bei der Herstellung der Spiegelhalterung (23) vom Kunststoff umspritzt werden.

2. Umlenkspiegelvorrichtung (20) für einen Ultraschalldurchflussmesser (10) umfassend einen Umlenkspiegel (21) mit wenigstens zwei abstehenden Beinen (22), wobei der Umlenkspiegel (21) und die Beine (22) einstückig gefertigt sind, und eine rohrförmige Spiegelhalterung (23) aus Kunststoff, in welcher der Umlenkspiegel (21) ohne jegliches Spiel so fixiert ist, dass der Umlenkspiegel (21) von einer Fluidströmung durch den rohrförmigen Querschnitt der Spiegelhalterung (23) umströmt wird,
**dadurch gekennzeichnet, dass**
der Umlenkspiegel (21) mit einem oder mehr Beinen (22) in eine oder mehr Taschen (26) in der Spiegelhalterung (23) eingeführt ist und ein oder mehrere weitere Beine (22) in eine oder mehrere weitere Taschen (27) mit einem aushärtenden Material, vorzugsweise einer ZweiKomponenten-Masse (28), eingegossen ist.

3. Vorrichtung nach Anspruch 1 oder 2,
**dadurch gekennzeichnet, dass**
der Umlenkspiegel (21) und die Beine (22) aus Keramik sind.

4. Vorrichtung nach einem der vorhergehenden Ansprüche, **dadurch gekennzeichnet, dass**
senkrecht zum rohrförmigen Querschnitt der Spiegelhalterung (23) eine Aufnahme für einen Ultraschallwandler (11) vorgesehen ist.

5. Vorrichtung nach einem der vorhergehenden Ansprüche, **dadurch gekennzeichnet, dass**
der Kunststoff der Spiegelhalterung (23) einen Glasfaseranteil aufweist.

6. Vorrichtung nach einem der vorhergehenden Ansprüche, **dadurch gekennzeichnet, dass**
die Umlenkspiegelvorrichtung (20) ein Außengewinde (25) zum Anschluss an eine Rohrleitung aufweist.

7. Ultraschalldurchflussmesser (10) umfassend ein Messrohr (12) mit einer rohrförmigen Messstrecke, wenigstens einen Ultraschallwandler (11) und wenigstens eine Umlenkspiegelvorrichtung (20) gemäß einem der Ansprüche 1 bis 5, wobei die Umlenkspiegelvorrichtung (20) koaxial mit dem Messrohr (12) so angeordnet ist, dass von einem Ultraschallwandler (11) stammende Ultraschallwellen von der Umlenkspiegelvorrichtung (12) in die Messstrecke umgelenkt werden.

8. Ultraschalldurchflussmesser nach Anspruch 7,
**dadurch gekennzeichnet, dass**
das Messrohr (12) und die Umlenkspiegelvorrichtung (20) miteinander stoffschlüssig durch Klebstoff oder Ultraschallverschweißen verbunden sind.

9. Ultraschalldurchflussmesser nach Anspruch 7,
**dadurch gekennzeichnet, dass**
das Messrohr (12) und die Umlenkspiegelvorrichtung (20) miteinander formschlüssig durch einen umlaufenden Spannbund (15) lösbar verbunden sind.

10. Ultraschalldurchflussmesser nach einem der Ansprüche 7 bis 9,
**dadurch gekennzeichnet, dass**
zwischen Messrohr (12) und Umlenkspiegelvorrichtung (20) eine Axialdichtung (30) und/oder eine Radialdichtung (31) vorgesehen ist.

11. Ultraschalldurchflussmesser nach einem der Ansprüche 7 bis 10,
**dadurch gekennzeichnet, dass**
das Messrohr (12) aus einem unverstärkten Kunststoff ist.
